# EUROPEAN PATENT APPLICATION

(11) **EP 4 336 625 A1**
(43) Date of publication of application: **13.03.2024**
(21) Application number: 23802551.4
(22) Date of filing: 06.04.2023
(51) Int. Cl.: H01M 10/613, H01M 10/6568, H01M 50/30

(54) **LIQUID COOLING PIPELINE AND LIQUID COOLING SYSTEM FOR ENERGY STORAGE SYSTEM, AND ENERGY STORAGE APPARATUS**

(30) Priority: 12.05.2022 CN 202221164116 U
(71) Applicant: Trina Storage Solutions (Jiangsu) Co., Ltd, Changzhou, Jiangsu 213031 (CN)
(72) Inventor: LU, Hongtao, Changzhou, Jiangsu 213031 (CN); WEN, Nina, Changzhou, Jiangsu 213031 (CN)
(74) Representative: Nederlandsch Octrooibureau
(86) International application number: PCT/CN2023/086381
(87) International publication number: WO 2023/216775

(57) **Abstract**

A liquid-cooling pipeline for an energy storage system, a liquid-cooling system for an energy storage system, and an energy storage device are provided in the present invention. The liquid-cooling pipeline for an energy storage system comprises: an inlet pipeline including a main inlet pipe, at least one battery cluster inlet pipe and at least one battery pack inlet pipe, wherein the main inlet pipe has a liquid inlet and at least one liquid outlet, each battery cluster inlet pipe has a liquid inlet and at least one liquid outlet, each battery pack inlet pipe has a liquid inlet and at least one liquid outlet, each liquid outlet of the main inlet pipe is connected to the liquid inlet of a corresponding cluster inlet pipe, and each liquid outlet of the battery cluster inlet pipe is connected to the liquid inlet of a corresponding battery pack inlet pipe; and an outlet pipeline including a main outlet pipe, at least one battery cluster outlet pipe and at least one battery pack outlet pipe, wherein the main outlet pipe has a liquid outlet and at least one liquid inlet, each battery cluster outlet pipe has a liquid outlet, an exhaust valve located at a top of the battery cluster outlet pipe and at least one liquid inlet, each battery pack outlet pipe has a liquid outlet and at least one liquid inlet, and wherein the liquid outlet of each battery pack outlet pipe is connected to the liquid inlet of a corresponding battery cluster outlet pipe, and the liquid outlet of each battery cluster outlet pipe is connected to a corresponding liquid inlet of the main outlet pipe.

## Description

### Technical field

The present disclosure mainly relates to the field of renewable energy, and specifically relate to a liquid-cooling pipeline, a liquid-cooling system, and an energy storage device.

### Background

Since the use of renewable energy such as wind energy and solar energy for power generation is susceptible to climate and weather effects, and as power grid operation faces many difficulties such as continuous increase in power load, expansion of the proportion of intermittent energy access, and limited peak-shaving means, energy storage technology has achieved unprecedented development.

At present, the cooling method of energy storage systems is mainly forced air cooling, and a few energy storage systems use liquid-cooling systems to cool battery packs. However, due to the large number of battery packs in an energy storage system, the number of liquid-cooling pipelines required in the energy storage system has increased significantly. The cooling pipes connected in series may cause the temperature of the coolant entering each battery pack to be uneven, and gas may easily be generated in the cooling circuit, leading to problems such as large temperature differences between battery packs and local high temperatures, which will affect the life and efficiency of the entire energy storage system.

Therefore, how to improve the temperature uniformity of the cooling pipelines and avoid the generation of gas in the cooling circuit is an urgent technical problem that needs to be solved.

### Summary

Some embodiments of the present disclosure are intended to provide a liquid-cooling pipeline, a liquid-cooling system for an energy storage system, and an energy storage device all of which can improve the temperature uniformity of the cooling pipelines and avoid the generation of gas in the cooling circuit.

In order to achieve above technical effects, the present disclosure proposes the following technical solutions: a liquid-cooling pipeline for an energy storage system, comprising: an inlet pipeline including a main inlet pipe, at least one battery cluster inlet pipe and at least one battery pack inlet pipe, wherein the main inlet pipe has a liquid inlet and at least one liquid outlet, each battery cluster inlet pipe has a liquid inlet and at least one liquid outlet, each battery pack inlet pipe has a liquid inlet and at least one liquid outlet, each liquid outlet of the main inlet pipe is connected to the liquid inlet of a corresponding cluster inlet pipe, and each liquid outlet of the battery cluster inlet pipe is connected to the liquid inlet of a corresponding battery pack inlet pipe; and an outlet pipeline including a main outlet pipe, at least one battery cluster outlet pipe and at least one battery pack outlet pipe, wherein the main outlet pipe has a liquid outlet and at least one liquid inlet, each battery cluster outlet pipe has a liquid outlet, an exhaust valve located at a top of the battery cluster outlet pipe and at least one liquid inlet, each battery pack outlet pipe has a liquid outlet and at least one liquid inlet, and wherein the liquid outlet of each battery pack outlet pipe is connected to the liquid inlet of a corresponding battery cluster outlet pipe, and the liquid outlet of each battery cluster outlet pipe is connected to a corresponding liquid inlet of the main outlet pipe.

In one embodiment, the liquid-cooling pipeline for an energy storage system further comprises at least two cooling flow channels, wherein each cooling flow channel has a liquid inlet connected to the liquid outlet of the battery pack inlet pipe and a liquid outlet connected to the liquid inlet of the battery pack outlet pipe wherein liquid flow directions in adjacent cooling flow channels are opposite.

In one embodiment, along a liquid flow direction in the battery cluster inlet pipe, inner diameters of the liquid inlet of the cooling flow channel is less than or equal to an inner diameter of the liquid outlet of the cooling flow channel.

In one embodiment, inner diameters of the at least one liquid outlet of each battery cluster inlet pipe decrease along a liquid flow direction therein.

In one embodiment, each inner diameter of the at least one liquid inlet of the main outlet pipe is not less than a maximum inner diameter of the at least one liquid outlet of the main inlet pipe.

In one embodiment, inner diameters of the at least one liquid outlet of the main inlet pipe increase along the direction of liquid flow.

In one embodiment, the main inlet pipe includes a first main inlet pipe made of flexible material and a second main inlet pipe, and the liquid inlet of the main inlet pipe is located at an end of the first main inlet pipe away from the second main inlet pipe.

In one embodiment, the main outlet pipe includes a first main outlet pipe made of flexible material and a second main outlet pipe, and the liquid outlet of the main outlet pipe is located at an end of the first main outlet pipe away from the second main outlet pipe.

The present disclosure also proposes a liquid-cooling system for an energy storage system, comprising: a liquid-cooling machine; and the liquid-cooling pipeline, and the liquid-cooling machine is connected to the liquid inlet of the main inlet pipe, and is connected to the liquid outlet of the main outlet pipe.

The present disclosure also proposes an energy storage device, comprising the liquid-cooling system.

The liquid-cooling pipeline of the present disclosure can effectively discharge the gas in the liquid and improve the temperature uniformity of the energy storage system by an exhaust valve set at the top of the inlet pipe of each battery cluster. In addition, the liquid-cooling pipeline of the present disclosure helps to improve the temperature uniformity of the energy storage device by setting the liquid outlet of the liquid main pipe to increase in the liquid flow direction and setting the liquid outlet of the battery cluster inlet pipe to decrease along the liquid flow direction.

### Description of the drawings

In order to make the above purposes, features, and advantages of the present disclosure more obvious and more understandable, the embodiments of the present disclosure are described in detail below with reference to the accompanying drawings.
FIG. 1 is a schematic structural diagram of a liquid-cooling pipeline used in an energy storage system according to an embodiment of the present disclosure;
FIG. 2 is a schematic structural diagram of the dotted box portion in FIG. 1;
FIG. 3 is a schematic structural diagram of a main inlet pipe according to an embodiment of the present disclosure;
FIG. 4 is a schematic structural diagram of a battery cluster inlet pipe according to an embodiment of the present disclosure;
FIG. 5 is a schematic structural diagram of a battery pack inlet pipe according to an embodiment of the present disclosure;
FIG. 6 is a schematic structural diagram of a main outlet pipe according to an embodiment of the present disclosure;
FIG. 7 is a schematic structural diagram of a battery cluster outlet pipe according to an embodiment of the present disclosure;
FIG. 8 is a schematic structural diagram of a battery pack outlet pipe according to an embodiment of the present disclosure;
FIG. 9 is a schematic structural diagram of a cooling flow channel according to an embodiment of the present disclosure;
FIG. 10 is a front schematic view of a battery cluster according to an embodiment of the present disclosure.

### Detailed description

In order to make the above objects, features and advantages of the present disclosure more obvious and understandable, the specific embodiments of the present disclosure are described in detail below with reference to the accompanying drawings.

Many specific details are set forth in the following description to fully understand the present disclosure, but the present disclosure can also be implemented in other ways different from those described here, so the present disclosure is not limited by the specific embodiments disclosed below.

As shown in this application and claims, words such as "a", "an", "an" and/or "the" do not specifically refer to the singular and may include the plural unless the context clearly indicates an exception. Generally speaking, the terms "comprising" and "comprising" only imply the inclusion of clearly identified steps and elements, and these steps and elements do not constitute an exclusive list. The method or apparatus may also include other steps or elements.

When describing the embodiments of the present disclosure in detail, for convenience of explanation, the cross-sectional views showing the device structure are not partially enlarged according to the general scale, and the schematic diagrams are only examples, which should not limit the scope of protection of the present disclosure. In addition, the three-dimensional dimensions of length, width and depth should be included in actual production.

For convenience of description, spatial relationship words such as "below", "below", "below", "below", "above", "on", etc. may be used to describe an element shown in the drawings. or the relationship of a feature to other elements or features. It will be understood that these spatially relative terms are intended to encompass other orientations of the device in use or operation in addition to the orientations depicted in the FIGs. For example, if the device in the FIGs. is turned over, elements described as "below" or "under" or "under" other elements or features would then be oriented "above" the other elements or features. Thus, the exemplary words "below" and "below" can encompass both upper and lower directions. The device may be otherwise oriented (rotated 90 degrees or at other orientations) and the spatially relative descriptors used herein should be interpreted accordingly. Additionally, it will also be understood that when a layer is referred to as being "between" two layers, it can be the only layer between the two layers, or one or more intervening layers may also be present.

In the context of this application, structures described as having a first feature "on" a second feature may include embodiments in which the first and second features are formed in direct contact, and may also include embodiments in which additional features are formed between the first and second features. Embodiments between second features such that the first and second features may not be in direct contact.

In addition, it should be noted that the use of words such as "first" and "second" to define parts is only to facilitate the distinction between corresponding parts. Unless otherwise stated, the above words have no special meaning and therefore cannot be understood. To limit the scope of protection of this application.

The liquid-cooling system, the liquid-cooling system, and the energy storage device of the present disclosure will be described through specific embodiments.

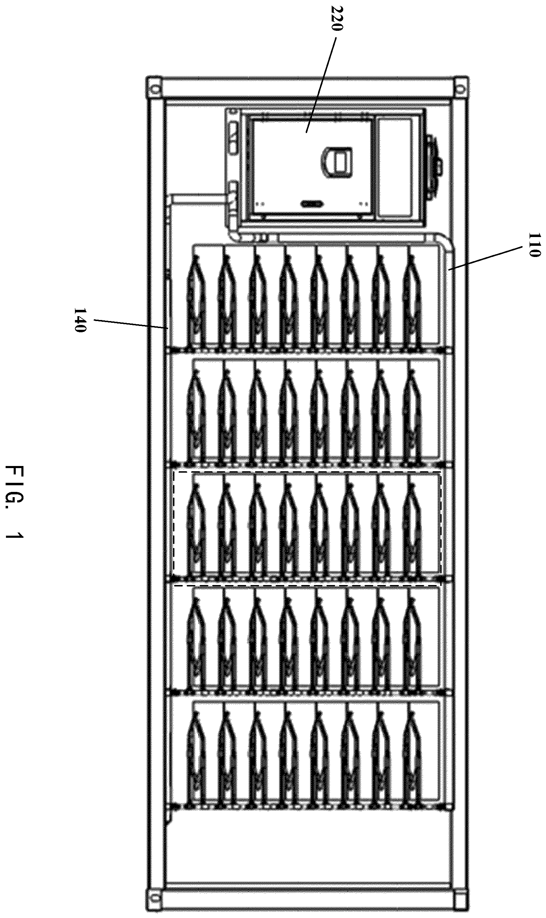

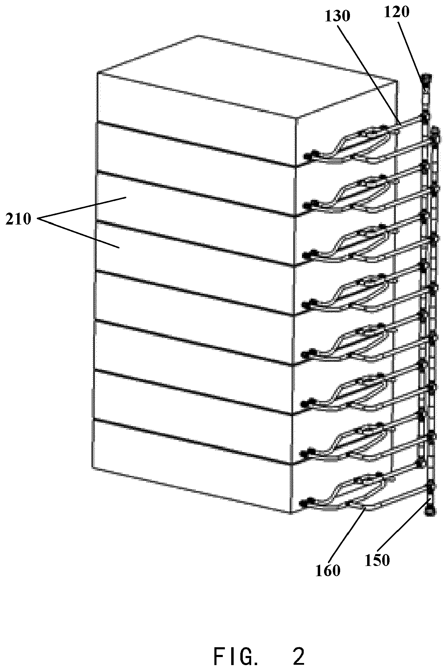

FIG. 1 shows a schematic structural diagram of a liquid-cooling pipeline and an energy storage device cooled by the liquid-cooling pipeline. The energy storage device includes five battery clusters 200. FIG. 2 is a schematic structural diagram of the dotted box portion in FIG. 1. A battery cluster is composed of eight battery packs 210 stacked in sequence. It can be understood that the number of the battery clusters and the battery packs can be adjusted according to actual needs and is not limited to the above embodiment.

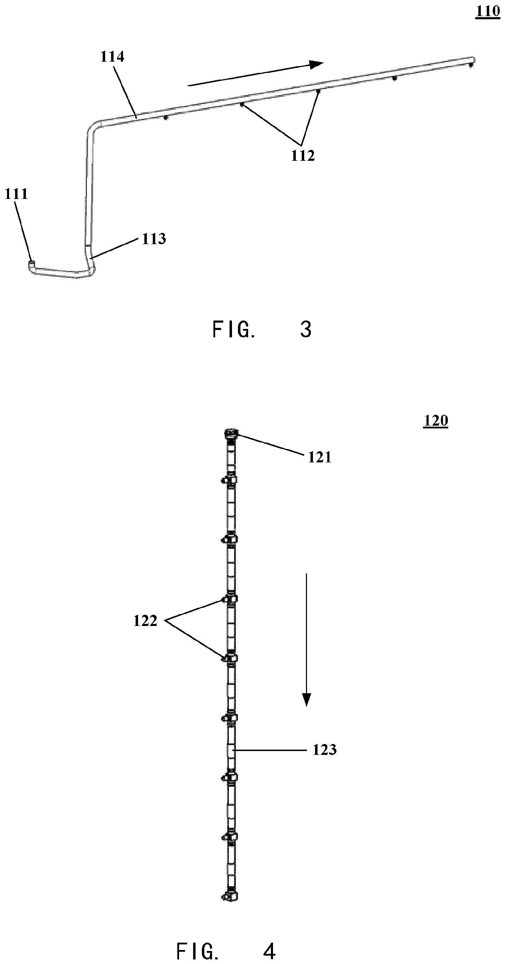

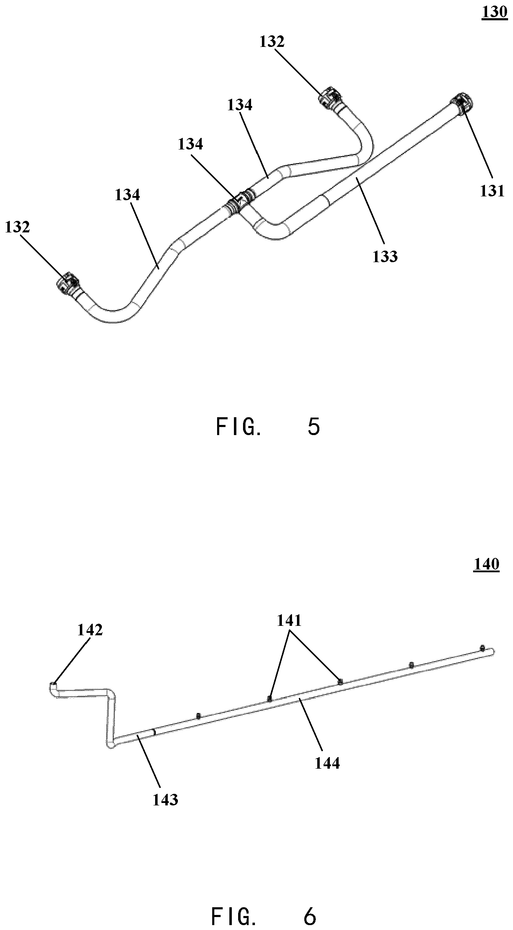

FIGs. 3 to 5 are schematic structural diagrams of different components in the inlet pipeline according to one embodiment of the present disclosure. FIGs. 6 to 8 are schematic structural diagrams of different components in the outlet pipeline according to one embodiment of the present disclosure. The liquid-cooling pipeline of the present disclosure will now be described with reference to FIGs. 1 to 8.

In one embodiment of the present disclosure, the liquid-cooling pipeline includes an inlet pipeline and an outlet pipeline. Referring to FIGs. 1 to 5, the inlet pipeline includes a main inlet pipe 110, five battery cluster inlet pipes 120 and eight battery pack inlet pipes 130. The main inlet pipe 110 extends generally along the horizontal direction as a whole. The battery cluster inlet pipe 120 extends generally along the vertical direction as a whole, and the battery cluster inlet pipes 120 are arranged at intervals.

Referring to FIG. 3, the main inlet pipe 110 has a liquid inlet 111 and five liquid outlets 112. The liquid inlet 111 is the inlet of the coolant which enters the main inlet pipe 110 from the liquid inlet 111. The liquid inlet 111 can be used to be connected with a liquid output of a coolant input device to input coolant to the main inlet pipe 110. In one embodiment of the present disclosure, the main inlet pipe 110 includes a first main inlet pipe 113 and a second main inlet pipe 114. The first main inlet pipe 113 is made of flexible material, and the liquid inlet 111 of the main inlet pipe 110 is located at an end of the first main inlet pipe 113 away from the second main inlet pipe 114. As the first main inlet pipe 113 is made of flexible material, and the liquid inlet 111 is set at one end of the first main inlet pipe 113, the main inlet pipe 110 is helped to be tightly connected with a liquid output end of the coolant input device, thereby preventing coolant leakage and avoid rupture of the main inlet pipe 110 due to thermal expansion and contraction of the main inlet pipe 110. In some embodiments, the first main inlet pipe is a rubber hose, and the second main inlet pipe is a metal pipe.

In some embodiments, the main inlet pipe 110 is covered with an insulation layer to prevent condensation.

It should be understood that the numbers of the liquid outlets of the main inlet pipe can be adjusted according to actual needs. For example, in the embodiment shown in FIG. 1, there are five battery clusters 200. In this case, five liquid outlets 112 are provided on the main inlet pipe 110. In other embodiments, the number of liquid outlets 112 can also be other numbers, such as 3, 7 or 8. The above embodiments do not constitute a limitation on the number of liquid outlets in the present disclosure. This description is also applicable to the embodiments about numbers below, and will not be repeated.

In one embodiment of the present disclosure, the inner diameters of the at least one liquid outlet 112 of the main inlet pipe 110 increase along the liquid flow direction (indicated by arrows in FIG. 3). It should be noted that the increasing of the inner diameters of the at least one liquid outlet 112 along the liquid flow direction includes the following situations. One is that the inner diameters of the at least one liquid outlet 112 increase sequentially along the liquid flow direction, conforming to a strict increasing function. Another is that the inner diameters of the at least one liquid outlet 112 increase along the liquid flow direction conforming to an increasing function, but the inner diameters of some adjacent liquid outlets 112 are the same. For example, the inner diameters of the part of the liquid outlets 112 close to the liquid inlet 111 of the main inlet pipe 110 are the same, but smaller than the inner diameters of the part of the liquid outlets 112 far away from the liquid inlet 111. When the coolant flows in the main inlet pipe, the flow rate of the coolant may decrease due to friction and other factors. By setting the inner diameters of the liquid outlets to increase along the direction of liquid flow, the flow rate of the coolant entering into inlet pipes of different battery clusters can be balanced, so that the flow rate of the coolant entering different battery clusters is the same, which is beneficial to avoid the phenomenon of large temperature differences in the system.

FIG. 4 is a schematic structural diagram of a battery cluster inlet pipe according to an embodiment of the present disclosure. Referring to FIG. 4, each battery cluster inlet pipe 120 has a liquid inlet 121 and eight liquid outlets 122. As shown in FIGs. 3 and 4, each liquid outlet 112 of the main inlet pipe 110 is respectively connected to the liquid inlet 121 of a battery cluster inlet pipe 120.

In one embodiment of the present disclosure, the inner diameter of the at least one liquid outlet 122 of the battery cluster inlet pipe 120 decreases along the liquid flow direction (shown by the arrow in FIG. 4). It should be noted that similar to "the inner diameters of the at least one liquid outlet 112 of the main inlet pipe 110 decrease along the direction of liquid flow", "the inner diameters of the at least one liquid outlet 121 of the battery cluster inlet pipe 120 decrease along the liquid flow direction" includes both situations of decreasing and strictly decreasing, which will not be described in detail here. Due to factors such as gravity, the flowing speed of coolant grows while flowing from the top of the battery cluster inlet pipe to the bottom of the battery cluster inlet pipe. Setting the inner diameters of the liquid outlet of the battery cluster inlet pipe to decrease along the liquid flow direction helps to improve the temperature uniformity of the liquid-cooling pipeline.

FIG. 5 is a schematic structural diagram of a battery pack inlet pipe according to an embodiment of the present disclosure. Referring to FIG. 5, each battery pack inlet pipe 130 has a liquid inlet 131 and two liquid outlets 132. Referring to FIGs. 4 and 5 together, each liquid outlet 122 of the battery cluster inlet pipe 120 is respectively connected to the liquid inlet 131 of a battery pack inlet pipe 130.

In one embodiment of the present disclosure, the battery pack inlet pipe 130 further includes a main pipeline 133 and two branch pipelines 134. The first ends of the two branch pipeline 134 are connected to the main pipeline 133 through a tee joint 135, and the two liquid outlets 132 are respectively located at the second ends of the two branch pipelines 134. The main pipeline 133 and the two branch pipelines 134 can both be nylon tubes. Nylon tubes have a certain degree of flexibility and are easy to bend and deform, which are especially suitable for complex environments.

For further understanding of the connection among the main inlet pipe, the cluster inlet pipe, and the battery pack inlet pipe in the present disclosure, a more detailed non-limiting embodiment is given here.

First, referring to FIGs. 3 and 4, the liquid outlets 112 of the main inlet pipes 110 are respectively connected to the liquid inlets 121 of one battery cluster inlet pipe 120. In some embodiments, the liquid inlet 121 of the battery cluster inlet pipe 120 is a quick-plug interface which can be quickly connected to the liquid outlet 112 of the main inlet pipe 110.

Next, referring to FIGs. 4 and 5, the liquid outlets 122 of the battery cluster inlet pipes 120 are respectively connected to the liquid inlets 131 of one battery pack inlet pipes 130. In some embodiments, the liquid outlets 122 of the battery cluster inlet pipe 120 are implemented as three-way joints, and bellows 123 are connected between the three-way joints.

So, the coolant enters the main inlet pipe 110 from the liquid inlet 111 of the main inlet pipe 110, the coolant then flows into the battery cluster inlet pipe 120 from the liquid inlet 121 connected to the liquid inlet outlet 112 of the main inlet pipe 110. The coolant then flows into the battery pack inlet pipe 130 from the liquid inlet 131 connected to the liquid outlet 122 of the battery cluster inlet pipe 120.

Next, the outlet pipeline is introduced through embodiments. Referring to FIGs. 6 to 8, the outlet pipeline includes a main outlet pipe 140, five battery cluster outlet pipes 150, and eight battery pack outlet pipes 160. The main outlet pipe 140 extends generally along the horizontal direction. The battery cluster outlet pipes 150 generally extend along the vertical direction, and the battery cluster outlet pipes 150 are arranged at intervals.

FIG. 6 shows a schematic structural diagram of a main outlet pipe according to an embodiment of the present disclosure. Referring to FIG. 6, the main outlet pipe has a liquid outlet 142 and five liquid inlets 141. The liquid outlet 142 can be used to connect with the coolant input device to recycle coolant.

In some embodiments, the main outlet pipe 140 includes a first main outlet pipe 143 and a second main outlet pipe 144. The first main outlet pipe 143 is made of flexible material. The liquid outlet of the main outlet pipe 140 is located at an end of the first main outlet pipe 143 away from the second main outlet pipe 144. As the first main outlet pipe 143 is made of flexible material, and the liquid inlet 141 is arranged at an end of the first main outlet pipe 143, the main outlet pipe 140 is helped to be tightly connected with the liquid output of the coolant input device, thereby preventing the coolant from leakage and preventing the main outlet pipe 140 from rupture caused by thermal expansion and contraction of the main outlet pipe 140. In some embodiments, the first main outlet pipe is a rubber hose, and the second main outlet pipe is a metal pipe.

In some embodiments, the main outlet pipe 110 is covered with an insulation layer to prevent condensation from occurring.

In some embodiments, the inner diameters of the least one liquid inlet of the main outlet pipe are not less than the maximum inner diameter of the at least one liquid outlets of the main inlet pipe. In this way, the resistance to coolant return can be reduced.

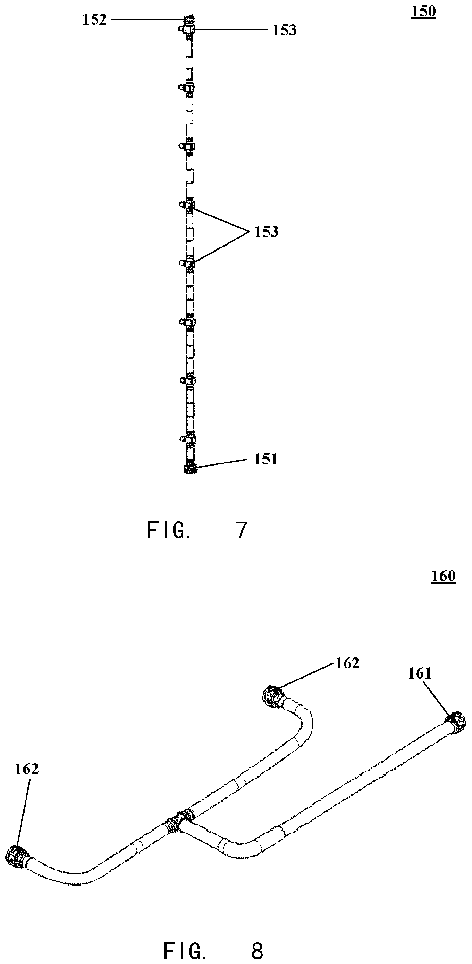

FIG. 7 is a schematic structural diagram of a battery cluster outlet pipe according to an embodiment of the present disclosure. Referring to FIG. 7, each battery cluster outlet pipe 150 has a liquid outlet 151, an exhaust valve 152 located at the top of the battery cluster outlet pipe 150, and eight liquid inlets 153. The liquid outlet 151 of each battery cluster outlet pipe 150 is connected to a corresponding liquid inlet 141 of the main outlet pipe 140. In some embodiments, the liquid inlet 141 is a quick-plug interface to facilitate quick connection with the liquid outlet 151. Before the liquid-cooling pipeline works, it is necessary to fill the liquid-cooling pipeline with coolant. When filling the coolant, most of the gas in the liquid-cooling pipeline will be extruded out of the liquid-cooling pipeline by the coolant. But there will still be a small amount of gas wrapped by the high-speed incoming coolant, forming bubbles inside the coolant. In addition, gas is also generated during the operation of the liquid-cooling pipeline. This gas may remain in the cooling pipeline because it cannot be discharged. Bubbles remaining in the coolant will cause local temperatures in the liquid-cooling pipeline to be too high. The inventor of the present disclosure found that due to gravity, the remaining gas in the cooling pile will converge to the top of each battery cluster inlet pipe. Compared with providing an exhaust valve on the main inlet pipe, the embodiment of the present disclosure installs an exhaust valve at the top of each battery cluster inlet pipe, which can effectively discharge the gas remaining in the coolant, thereby avoiding local overheating of the liquid-cooling pipeline caused by the gas remaining in the coolant.

FIG. 8 is a schematic structural diagram of a battery pack outlet pipe according to an embodiment of the present disclosure. Each battery pack outlet pipe 160 has a liquid outlet 161 and two liquid inlets 162. The liquid outlet 161 of the battery pack outlet pipe 160 is connected to the liquid inlet 153 of the battery cluster outlet pipe 150.

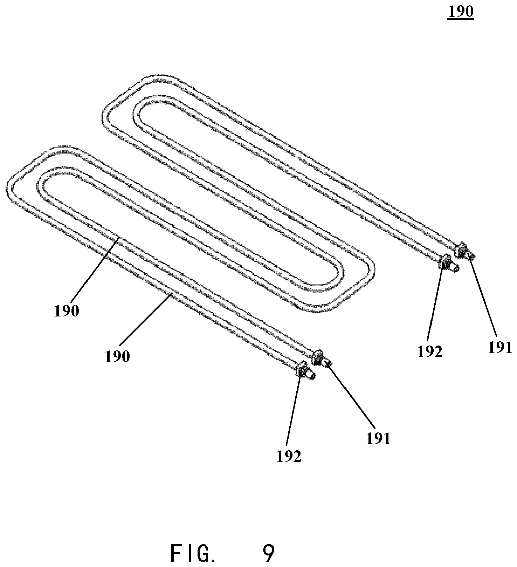

In one embodiment of the present disclosure, the liquid-cooling pipeline further includes at least two cooling flow channels. Referring to the schematic structural diagram of a cooling flow channel according to an embodiment of the present disclosure shown in FIG. 9, there are two cooling flow channels 190 in this embodiment, and each cooling flow channel 190 has a liquid inlet 191 and a liquid outlet 192. The liquid inlet 191 is connected to the liquid outlet 132 of the battery pack inlet pipe 130, the liquid outlet 192 is connected to the liquid inlet 162 of the battery pack outlet pipe 160, and the flow direction of the coolant in adjacent cooling channels 190 is opposite. As shown in FIG. 2, the cooling flow channel 190 is provided inside the battery pack 210, and the coolant flowing through the cooling channel 190 dissipates heat from the battery pack 210. By arranging the cooling flow channels so that the cooling fluid flows in opposite directions in adjacent cooling flow channels, the temperature uniformity of the battery pack is improved.

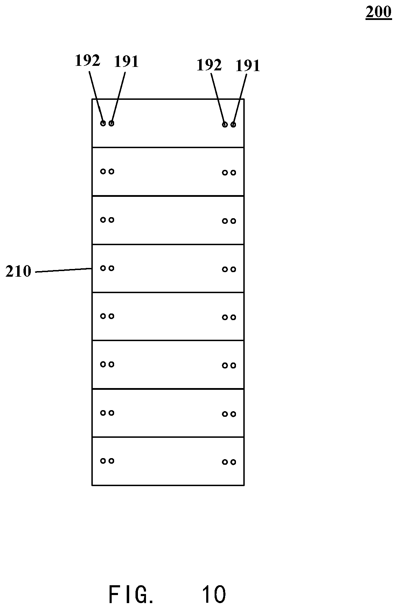

In some embodiments, along the flow direction of the liquid in the battery cluster inlet pipe, the inner diameter of the liquid inlet is larger than the inner diameter of the liquid outlet of the cooling flow channel. Referring to FIG. 10, which is a schematic front view of a battery cluster according to an embodiment of the present disclosure. In order to facilitate understanding of the settings of the inner diameters of the liquid inlet and the liquid outlet of the cooling flow channel in the present disclosure, a non-limiting example is given here.

In this embodiment, the battery cluster 200 has eight battery packs 210 stacked in sequence. Each battery pack has two cooling flow channels, the liquid inlet 191 and the liquid outlet 192 of the cooling flow channel 190 is located outside the battery pack 210. The coolant enters the cooling flow channel in the battery pack 210 from the liquid inlet 191 and flows out from the liquid outlet 192. The inner diameters of the liquid inlet 191 and the liquid outlet 192 of the cooling flow channel 190 in the four battery packs 210 located at the upper part of the battery cluster 200 are consistent. The inner diameter of the liquid outlet 192 of the middle two battery packs 210 is consistent with the inner diameter of the liquid outlet 192 of the cooling flow channel 190 in the four battery packs 210 located at the upper part of the battery cluster 200, and the inner diameter of the liquid inlet 191 of the middle two battery packs is less than the inner diameter of the liquid outlet 192 of the middle two battery packs. The inner diameter of the liquid inlet 191 in the lowermost two of battery packs 210 is consistent with the inner diameter of the liquid outlet 192, and the inner diameter is consistent with the inner diameter of the liquid inlet 191 of the middle two of battery packs 210, it helps ensure the temperature uniformity of the battery pack.

In order to facilitate understanding of the flow path of the coolant in the present disclosure, a non-limiting embodiment is given here. Referring to FIGs. 2 to 9, the coolant entering the main inlet pipe 110 from the liquid inlet 111 of the main inlet pipe 110 first flows through the battery cluster inlet pipe 120, then flows to the battery pack inlet pipe 130, and enters the cooling flow channel 190 through the liquid inlet 191 of the cooling flow channel 190 connected to the battery pack inlet pipe 120 to cool the battery pack 210. Subsequently, the coolant flows out from the cooling pipe 190 into the battery pack outlet pipe 160, then enters the main outlet pipe 140 through the battery cluster outlet pipe 150, and finally flow out through the liquid outlet 141 of the main outlet pipe 140.

In the liquid-cooling pipeline of the present disclosure, the liquid outlet of the main outlet pipe is configured to increase in the direction of liquid flow, and the liquid outlet of the battery cluster inlet pipe is configured to decrease in the direction of liquid flow, which is beneficial to improve the temperature uniformity of liquid-cooling pipelines. In addition, the gas in the liquid can be effectively discharged and the temperature uniformity of the liquid-cooling pipeline can thus be improved by installing the exhaust valve at the top of the battery cluster inlet pipe.

Returning to FIG. 1, the present disclosure also provides a liquid-cooling system for an energy storage system. The liquid-cooling system includes the liquid-cooling pipeline as mentioned above and a liquid-cooling machine 220. The liquid-cooling machine 220 is connected to the liquid inlet of the main inlet pipe and the liquid outlet of the main outlet pipe. On the one hand, the above-mentioned liquid-cooling machine can provide power for the coolant, and on the other hand, it can reduce the temperature of the coolant.

The present disclosure also provides an energy storage device including the liquid-cooling system as mentioned above.

The liquid-cooling system and energy storage device used in the energy storage device of the present disclosure have the effect of improving the temperature uniformity of the cooling pipeline.

The basic concepts have been described above. Obviously, for those skilled in the art, the above utility model disclosures are only examples and do not constitute limitations to the present application. Although not explicitly stated herein, those skilled in the art may make various modifications, improvements, and corrections to this application. Such modifications, improvements and corrections are suggested in this application, so such modifications, improvements and corrections still fall within the spirit and scope of the exemplary embodiments of this application.

Moreover, this application uses specific words to describe the embodiments of the application. For example, "one embodiment", "an embodiment", and/or "some embodiments" means a certain feature, structure or characteristic related to at least one embodiment of the present application. Therefore, it should be emphasized and noted that "one embodiment" or "an embodiment" or "an alternative embodiment" mentioned twice or more at different places in this specification does not necessarily refer to the same implementation. example. In addition, certain features, structures or characteristics in one or more embodiments of the present application may be appropriately combined.

In some embodiments, numbers are used to describe the quantities of components and properties. It should be understood that such numbers used to describe the embodiments are modified by the modifiers "about", "approximately" or "substantially" in some examples. Grooming. Unless otherwise stated, "about," "approximately," or "substantially" means that the stated number is allowed to vary by ± 20%. Accordingly, in some embodiments, the numerical parameters used in the specification and claims are approximations that may vary depending on the desired features of the individual embodiment. In some embodiments, numerical parameters should account for the specified number of significant digits and use general digit preservation methods. Although the numerical fields and parameters used to confirm the breadth of the ranges in some embodiments of the present application are approximations, in specific embodiments, such numerical values are set as accurately as feasible.

## Claims

1. A liquid-cooling pipeline for an energy storage system, **characterized by** comprising:
an inlet pipeline including a main inlet pipe, at least one battery cluster inlet pipe and at least one battery pack inlet pipe, wherein the main inlet pipe has a liquid inlet and at least one liquid outlet, each battery cluster inlet pipe has a liquid inlet and at least one liquid outlet, each battery pack inlet pipe has a liquid inlet and at least one liquid outlet, each liquid outlet of the main inlet pipe is connected to the liquid inlet of a corresponding cluster inlet pipe, and each liquid outlet of the battery cluster inlet pipe is connected to the liquid inlet of a corresponding battery pack inlet pipe; and
an outlet pipeline including a main outlet pipe, at least one battery cluster outlet pipe and at least one battery pack outlet pipe, wherein the main outlet pipe has a liquid outlet and at least one liquid inlet, each battery cluster outlet pipe has a liquid outlet, an exhaust valve located at a top of the battery cluster outlet pipe and at least one liquid inlet, each battery pack outlet pipe has a liquid outlet and at least one liquid inlet, and wherein the liquid outlet of each battery pack outlet pipe is connected to the liquid inlet of a corresponding battery cluster outlet pipe, and the liquid outlet of each battery cluster outlet pipe is connected to a corresponding liquid inlet of the main outlet pipe.

2. The liquid-cooling pipeline of claim 1, further comprises at least two cooling flow channels, wherein each cooling flow channel has a liquid inlet connected to the liquid outlet of the battery pack inlet pipe and a liquid outlet connected to the liquid inlet of the battery pack outlet pipe wherein liquid flow directions in adjacent cooling flow channels are opposite.

3. The liquid-cooling pipeline of claim 2, wherein along a liquid flow direction in the battery cluster inlet pipe, an inner diameter of the liquid inlet of the cooling flow channel is less than or equal to an inner diameter of the liquid outlet of the cooling flow channel.

4. The liquid-cooling pipeline of claim 1, wherein inner diameters of the at least one liquid outlet of each battery cluster inlet pipe decrease along a liquid flow direction therein.

5. The liquid-cooling pipeline of claim 1, wherein each inner diameter of the at least one liquid inlet of the main outlet pipe is not less than a maximum inner diameter of the at least one liquid outlet of the main inlet pipe.

6. The liquid-cooling pipeline of claim 1, wherein inner diameters of the at least one liquid outlet of the main inlet pipe increase along the direction of liquid flow.

7. The liquid-cooling pipeline of claim 1, wherein the main inlet pipe includes a first main inlet pipe made of flexible material and a second main inlet pipe, and the liquid inlet of the main inlet pipe is located at an end of the first main inlet pipe away from the second main inlet pipe.

8. The liquid-cooling pipeline of claim 7, wherein the main outlet pipe includes a first main outlet pipe made of flexible material and a second main outlet pipe, and the liquid outlet of the main outlet pipe is located at an end of the first main outlet pipe away from the second main outlet pipe.

9. A liquid-cooling system for an energy storage system, **characterized by** comprising:
a liquid-cooling machine; and
a liquid-cooling pipeline according to any one of claims 1 to 8, and the liquid-cooling machine is connected to the liquid inlet of the main inlet pipe, and is connected to the liquid outlet of the main outlet pipe.

10. An energy storage device, **characterized by** comprising a liquid-cooling system according to claim 9.
